# EUROPEAN PATENT SPECIFICATION

(11) **EP 2 983 921 B1**
(45) Date of publication and mention of the grant of the patent: **16.08.2017**
(21) Application number: 14721975.2
(22) Date of filing: 08.04.2014
(51) Int. Cl.: B43L 19/00, B43L 13/02, B43L 13/00, G06F 3/13

(54) **VERTICAL PLOTTER**
VERTIKALER PLOTTER
TRACEUR VERTICAL

(30) Priority: 08.04.2013 EP 13162804
(43) Date of publication of application: 17.02.2016
(73) Proprietor: Ratti, Carlo Filippo, Torino (IT)
(72) Inventor: Ratti, Carlo Filippo, Torino (IT)
(74) Representative: Mola, Edoardo
(86) International application number: PCT/IB2014/060532
(87) International publication number: WO 2014/167497

(56) References cited:
- EP-A1- 1 486 350
- DE-B3-102007 022 968
- GB-A- 1 093 146
- US-A- 4 920 422
- US-A- 4 991 116
- US-B1- 6 367 902
- US-B1- 6 368 002

## Description

### BACKGROUND OF THE INVENTION

The proposed invention is in the technical field of plotters. More specifically, the present invention is in the technical field of vertical plotters.

More specifically, the present invention is in the technical field of vertical plotters for a wall application. US6367902 discloses a plotter according to the preamble of claim 1.

### BRIEF DESCRIPTION OF THE DRAWINGS

Fig. 1 is a functional diagram of the proposed invention: the printing head is suspended by two cables (belts) and connected to a power supply;

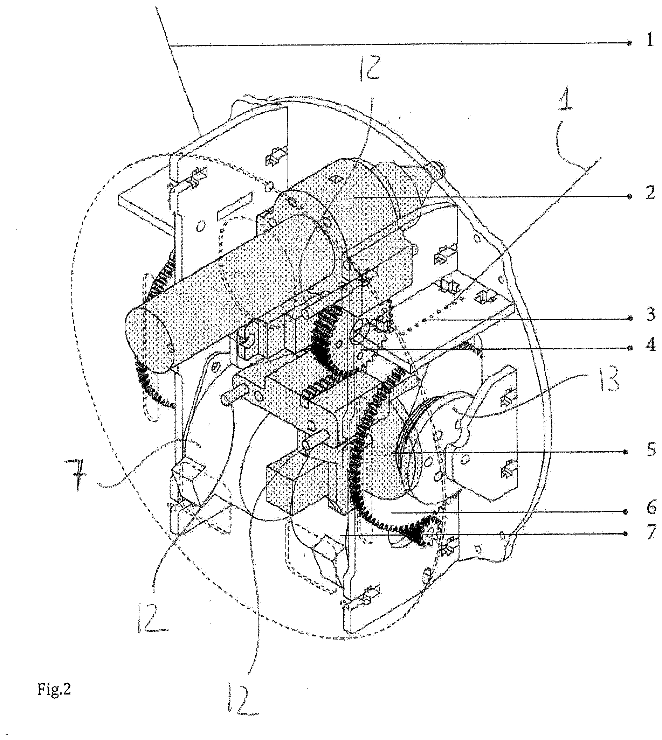

Fig. 2 is a perspective view of the printing head showing its main components;
Fig. 3 is a section of the printing head showing its main components.

### SUMMARY OF THE INVENTION

The proposed invention is a vertical plotter: a system that allows printing vector graphics on a vertical planar surface using gravity and two independent motors 7 mounted within the printing head as actuators.

The plotter is suspended by the two cables (or belts) 1 fixed at the two top extremities of the wall on one end and connected to the at least two independent motors 7 at the other end through a reduction gear 6. In particular, each reduction gear 6 is attached to a respective cable 1 by a reel 13.

Each motor 7, i.e. electric motor, rolling up or unrolling cable 1 or a synchronous belt, allows the planar movement of the plotter on a vertical surface or a wall.

The invention can be applied to any vertical planar surface just fixing the two top extremities of the two cables 1 at the same high and at a given distance on the wall. Gravity will ensure proper tension on cables 1 or belts.

A further actuator 2 within the vertical plotter allows moving a writing nib in and out through a servo-motor 4, putting it in contact with the surface, in order to draw or discontinue a drawing line.

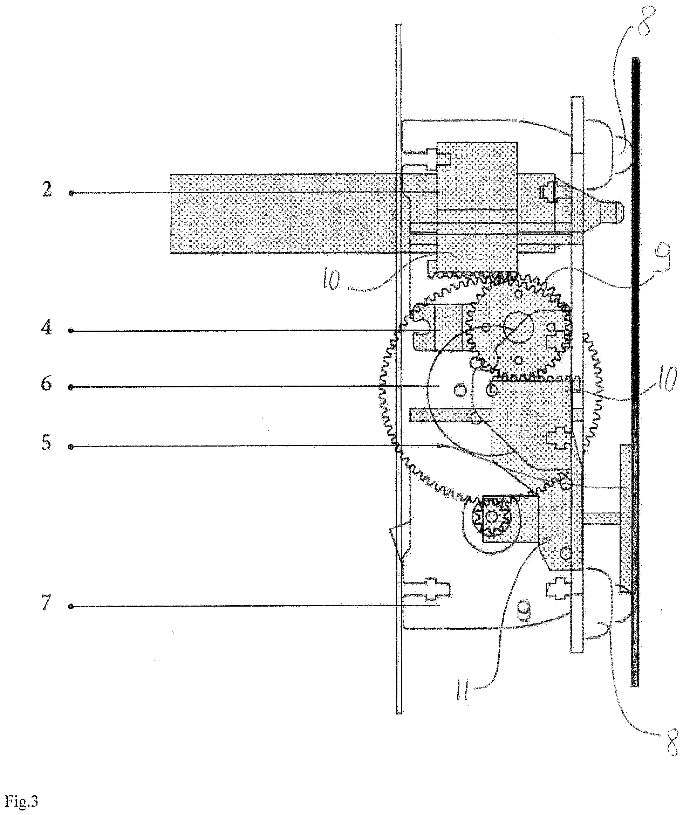

Main features of the object are:
- All mechanics and motors, in addition to the writing system, are mounted on the printing head; this allows the object to be very easily installed, used and maintained.
   Furthermore all the electronics is integrated within the print head: a power connection must be provided for an external electrical power source having a transformer.
- Preferably data are exchanged through Wi-Fi or another wireless technology: this means that, given a Wi-Fi connection, the vertical plotter can work autonomously receiving input from a remote device, such as a smartphone or a PC (Internet connection must be provided); data can also be communicated through a USB cable and read by an SD flash memory card (an USB socket will be also integrated into the printing head in order to allow an easy plug-and-play of the vertical plotter to a computer);
- Preferably an erasing system - a rotating mechanism finished with Velcro 5 - can erase what was previously drawn. The planar vertical surface should be finished with a dry erase whiteboard or glass. This allows the user to write, erase and re-write contents on the planar vertical surface. Preferably, the nib or a carrier for a writing element is actuated by the same actuator 4 which controls the erasing system 5 so that when the erasing system 5 operates the writing element is inhibited, i.e. is kept distanced from the writing surface, and vice-versa. This can be obtained by a sprocket 9 acting on two opposed racks 10 (see figure 3).
- Preferably detect limit switch sensors 3 located on the printing head allow the vertical plotter to understand its actual position on the vertical surface. This permits the plotter to start operating without the need to manually position the printing head on a specific point on the wall; this is necessary to the system to properly elaborate the coordinates needed to move freely on the wall.

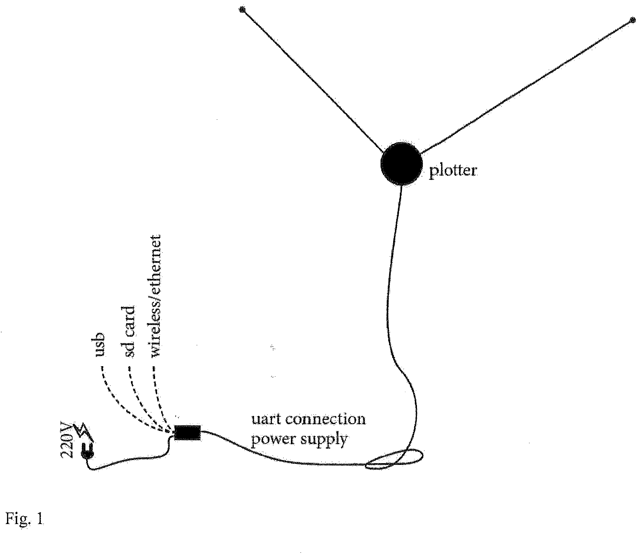

As shown in figure 1, racks 10 are respectively connected to the carrier for the writing device and the a support 11 for the Velcro-finished element of the erasing device. Racks 10 are guided by linear slides 12 (figure 1). Furthermore, printing head comprises contact projections 8 to rest on the writing surface while either erasing device 5 or the nib contacts the writing surface.

### WORKFLOW

The workflow first thing foresees the generation of a series of polar coordinates necessary to draw the desired graphics on the vertical surface starting from Cartesian coordinates. All these coordinates are generated via software (i.e. Processing) starting from a vector/raster graphic image and/or a string of text provided by the user through a dedicated interface on a computer.

These coordinates are subsequently sent to a microcontroller (i.e. Arduino) installed within the printing head. The microcontroller elaborates the interpolations necessary to for the printing head to reach its proper position on the wall, point after point.

The microcontroller indeed activates motors 7 that, allowing reels 13 to rotate, rolling up or unrolling cables 1 (or the belts), let the printing head to move freely on the vertical surface; in addition to this, the microcontroller activates the writing/erasing systems previously described.

Preferably, a series of state LEDs allow the printing head to display its status, i.e. calibrating, moving, writing, erasing, to the user.

## Claims

1. A vertical plotter comprising a printing head, two motorized reels (13) carried by the printing head, flexible elements (1) attached to the respective motorized reel and suitable to be attached to a support so that the printing head can move and print on a substantially vertical surface, and an erasing device (5) carried by the printing head, **characterized by** comprising a carrier for a writing element and a servo-motor (4) controlling both the erasing device and the carrier so that when the erasing device operates the writing element is inhibited.

2. A vertical plotter according to claim 1, **characterized in that** the servo-motor is configured to keep the erasing device away from the writing surface when the carrier is operating.

3. A vertical plotter according to claim 2, **characterized in that** the servo-motor is a rotary motor and by comprising a sprocket and a first and a second rack meshing with the sprocket, the sprocket being attached to the servo-motor, the first rack being attached to carrier and the second rack being attached to the erasing device.

4. A vertical plotter according to any of the preceding claims, **characterized by** comprising sensors cooperating with the flexible elements to detect the actual position of the printing head on the writing surface.

5. A vertical plotter according to any of the preceding claims, **characterized in that** the erasing device is a rotating device.

6. A vertical plotter according to any of the preceding claims, **characterized in that** the entire control electronics is integrated and on-board the printing head.

## Patentansprüche

1. Vertikaler Plotter mit einem Druckkopf, zwei motorbetriebenen Rollen (13), die von dem Druckkopf getragen werden, flexiblen Elementen (1), die an der entsprechenden motorbetriebenen Rolle angebracht sind und dazu geeignet sind, an einer Stütze angebracht zu werden, so dass der Druckkopf sich bewegen und auf eine im wesentlichen vertikale Fläche drucken kann, und einer Löschvorrichtung (5), die von dem Druckkopf getragen wird, **gekennzeichnet durch** einen Träger für ein Schreibelement und einen Servomotor (4), der sowohl die Löschvorrichtung als auch den Träger steuert, so dass das Schreibelement blockiert ist, wenn die Löschvorrichtung in Betrieb wird.

2. Vertikaler Plotter nach Anspruch 1, **dadurch gekennzeichnet, dass** der Servomotor dazu vorgesehen ist, die Löschvorrichtung von der Schreibfläche fern zu halten, wenn der Träger arbeitet.

3. Vertikaler Plotter nach Anspruch 2, **dadurch gekennzeichnet, dass** der Servomotor ein Drehmotor ist und ein Zahnrad enthält sowie eine erste und eine zweite Zahnstange, die mit dem Zahnrad kämmt, wobei das Zahnrad an dem Servomotor angebracht ist, die erste Zahnstange an dem Träger und die zweite Zahnstange an der Löschvorrichtung befestigt sind.

4. Vertikaler Plotter nach einem der vorstehenden Ansprüche, **gekennzeichnet durch** Sensoren, die mit den flexiblen Elementen zusammen arbeiten, um die tatsächliche Position des Druckerkopfes auf der Schreibfläche zu detektieren.

5. Vertikaler Plotter nach einem der vorstehenden Ansprüche, **dadurch gekennzeichnet, dass** die Löschvorrichtung eine rotierende Vorrichtung ist.

6. Vertikaler Plotter nach einem der vorstehenden Ansprüche, **dadurch gekennzeichnet, dass** die gesamte Steuerelektronik in den Druckerkopf integriert und darin enthalten ist.

## Revendications

1. - Traceur vertical comprenant une tête d'impression, deux bobines motorisées (13) portées par la tête d'impression, des éléments flexibles (1) attachés à la bobine motorisée respective et appropriés pour être attachés à un soutien de telle sorte que la tête d'impression peut se déplacer et imprimer sur une surface sensiblement verticale, et un dispositif d'effacement (5) porté par la tête d'impression, **caractérisé par le fait qu'**il comprend un support pour un élément d'écriture et un servomoteur (4) commandant à la fois le dispositif d'effacement et le support de telle sorte que, lorsque le dispositif d'effacement fonctionne, l'élément d'écriture est inhibé.

2. - Traceur vertical selon la revendication 1, **caractérisé par le fait que** le servomoteur est configuré pour maintenir le dispositif d'effacement à distance de la surface d'écriture lorsque le support fonctionne.

3. - Traceur vertical selon la revendication 2, **caractérisé par le fait que** le servomoteur est un moteur rotatif et **par le fait qu'**il comprend une roue dentée et des première et seconde crémaillères engrenant la roue dentée, la roue dentée étant fixée au servomoteur, la première crémaillère étant attachée au support et la seconde crémaillère étant attachée au dispositif d'effacement.

4. - Traceur vertical selon l'une quelconque des revendications précédentes, **caractérisé par le fait qu'**il comprend des capteurs coopérant avec les éléments flexibles pour détecter la position réelle de la tête d'impression sur la surface d'écriture.

5. - Traceur vertical selon l'une quelconque des revendications précédentes, **caractérisé par le fait que** le dispositif d'effacement est un dispositif rotatif.

6. - Traceur vertical selon l'une quelconque des revendications précédentes, **caractérisé par le fait que** la totalité de l'électronique de commande est intégrée et embarquée dans la tête d'impression.
